# EUROPEAN PATENT SPECIFICATION

(11) **EP 2 383 172 B1**
(45) Date of publication and mention of the grant of the patent: **11.11.2015**
(21) Application number: 11163600.7
(22) Date of filing: 22.04.2011
(51) Int. Cl.: B62J 1/08, B62J 1/00, B62J 1/02

(54) **Bicycle seat with shock absorbing device**
Fahrradsattel mit Stoßdämpfvorrichtung
Siège de bicyclette avec dispositif d'absorption de chocs

(30) Priority: 27.04.2010 TW 099207634
(43) Date of publication of application: 02.11.2011
(73) Proprietor: Kind Shock Hi-Tech Co., Ltd., Tainan City 709 (TW)
(72) Inventor: Hsu, Jung Yu, TAINAN CITY 709 (TW)
(74) Representative: Chaillot, Geneviève

(56) References cited:
- DE-A1-102006 055 600
- US-A- 872 124
- US-B1- 6 290 291
- US-B1- 6 402 236

## Description

### FIELD OF THE INVENTION

The present invention relates to a bicycle seat, and more particularly, to a bicycle seat including two individual parts and a spring board connected between the two individual parts which are individually deformed for adaptation of weight center change of the cyclist.

### BACKGROUND OF THE INVENTION

A conventional bicycle seat is directly in contact with the body of the cyclist and when the cyclist change his/her weight center, the bicycle seat directly corresponds to the change. The conventional bicycle seat is a one-piece part which has a shock absorbing device connected to an underside thereof so that when the bicycle turns, goes upward, goes downward, or rides over a bump, the weight center of the cyclist changes because the cyclist's hip changes its poses. The conventional bicycle seat cannot be properly deformed along with the change of the weight center of the cyclist so that the cyclist does not feel comfortable.

A Taiwan Published Patent Application No. M373860 discloses a shock absorbing seat and includes a main part and a locking portion which is securely connected with the board portion of a spring board. The spring board includes two wings and each wing has a tubular portion connected thereto. A U-shaped frame includes two arms extending backward from two ends thereof and the two arms are connected to the two wings and the closed end of the U-shaped frame is inserted in a fixing member located at the front end of the main part of the bicycle seat. The u-shaped frame is easily to be installed to the seat or removed from the seat.

However, the main part is a one-piece part and cannot be deformed along with the poses change of the cyclist and the spring board is fixed to the one-piece part so that it cannot provide satisfied shock absorbing functions.

The present invention intends to provide a bicycle seat which includes two individual parts which can be deformed according change of weight center of the cyclist.

### SUMMARY OF THE INVENTION

The present invention, in accordance with claim 1, relates to a bicycle seat and comprises a first part and a second part, and each of the two parts has a narrow front end and a wide rear end. The first and second parts are located side by side. A spring member has two ends fixed to the two respective rear ends of the first and second parts respectively. A first fixing member is fixed to an underside of the spring member and a second fixing member is connected across the two respective front ends of the first and second parts respectively.

The first and second parts are two individual parts.

The spring member includes at least one first threaded hole defined in a mediate portion thereof.

The first fixing member includes a second threaded hole which is located corresponding to the at least one first threaded hole. Two passages are defined in two ends of the first fixing member. Two third threaded holes are respectively defined through a wall of the two ends of the first fixing member and communicate with the two passages respectively.

A first bolt is connected to the second threaded hole of the first fixing member.

A second bolt is connected to the third threaded hole of the first fixing member.

The spring member is a spring board and includes two slots defined therein.

The second fixing member has a reception recess.

A frame includes a closed end, a first distal end and a second distal end, wherein the closed end is inserted into the reception recess of the second fixing member.

The first and second parts can alternatively be connected at respective front ends thereof so as to from a closed area. A gap is defined longitudinally from the closed area to the rear ends of the first and second parts.

U.S. patent No. 6,402,236 discloses a bicycle seat as defined in the preamble of claim 1.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view to show the bicycle seat of the present invention;

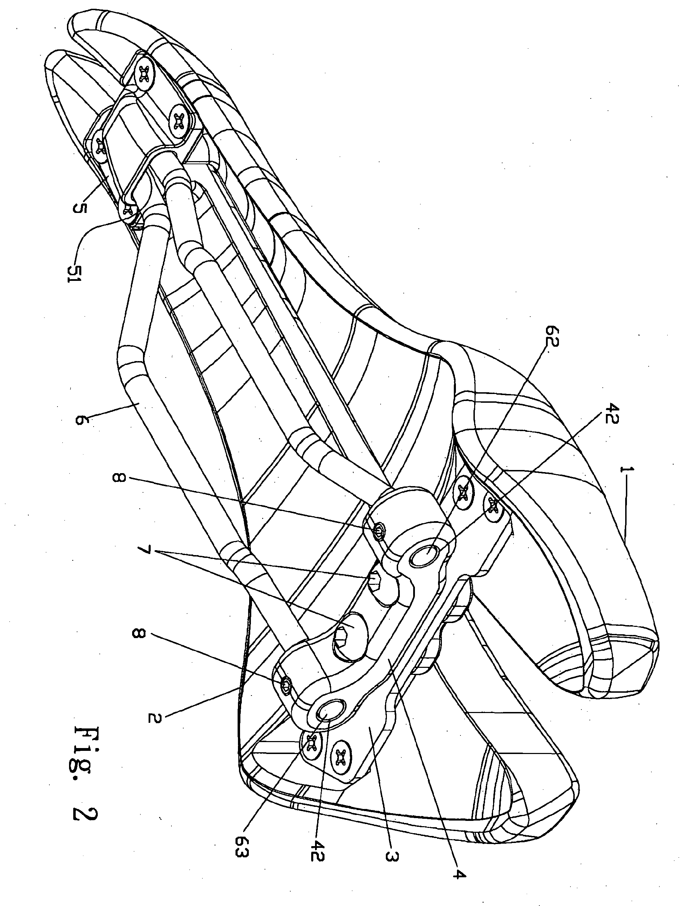

Fig. 2 is a perspective view to show the bicycle seat of the present invention;

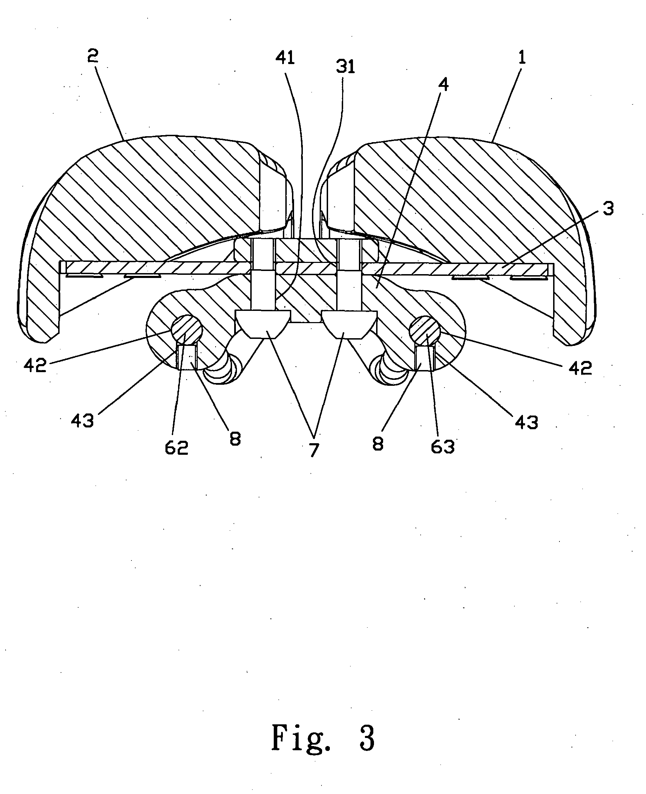

Fig. 3 is an end cross sectional view of the bicycle seat of the present invention;
Fig. 4 is an end cross sectional view of the bicycle seat of the present invention, wherein the first part is applied by a force;
Fig. 5 is an end cross sectional view of the bicycle seat of the present invention, wherein the second part is applied by a force;
Fig. 6 shows another embodiment of the spring member of the bicycle seat of the present invention, and
Fig. 7 shows another embodiment of the bicycle seat of the present invention.

### DETAILED DESCRIPTION OF THE PREFERRED EMBODIMENT

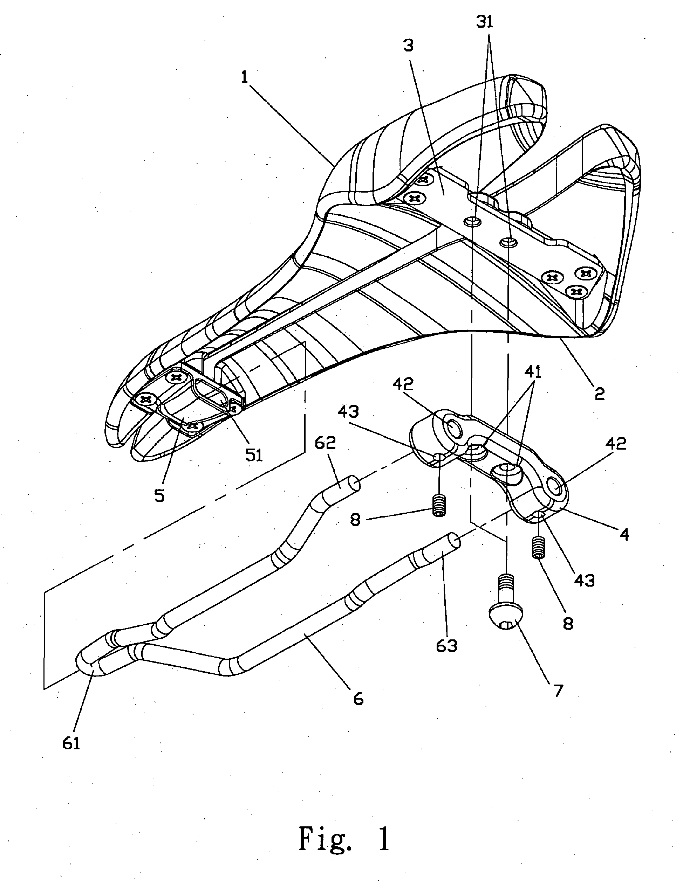

Referring to Fig. 1, the bicycle seat of the present invention comprises a first part 1 which has a narrow front end and a wide rear end. A second part 2 has a narrow front end and a wide rear end. The first and second parts 1, 2 are located side by side. The first and second parts 1, 2 are two individual parts.

A spring member 3 has two ends fixed to the two respective rear ends of the first and second parts 1, 2 respectively. The spring member 3 includes at least one first threaded hole 31 defined in a mediate portion thereof. The spring member 3 is a spring board and includes two slots 32 defined therein.

A first fixing member 4 is fixed to an underside of the spring member 3 and includes a second threaded hole 41 which is located corresponding to the at least one first threaded hole 31. Two passages 42 are defined in two ends of the first fixing member 4. Two third threaded holes 43 are respectively defined through a wall of the two ends of the first fixing member 4 and communicate with the two passages 42 respectively.

A second fixing member 5 is connected across the two respective front ends of the first and second parts 1, 2 respectively. The second fixing member 5 has a reception recess 51.

A frame 6 includes a closed end 61, a first distal end 62 and a second distal end 63. The closed end 61 is inserted into the reception recess 51 of the second fixing member 5.

A first bolt 7 is connected to the second threaded hole 41 of the first fixing member 4 and the first threaded hole 31 of the spring member 3.

A second bolt 8 is connected to the third threaded hole 43 of the first fixing member 4 and contacts against the first/second distal end 62/63 in the passages 42.

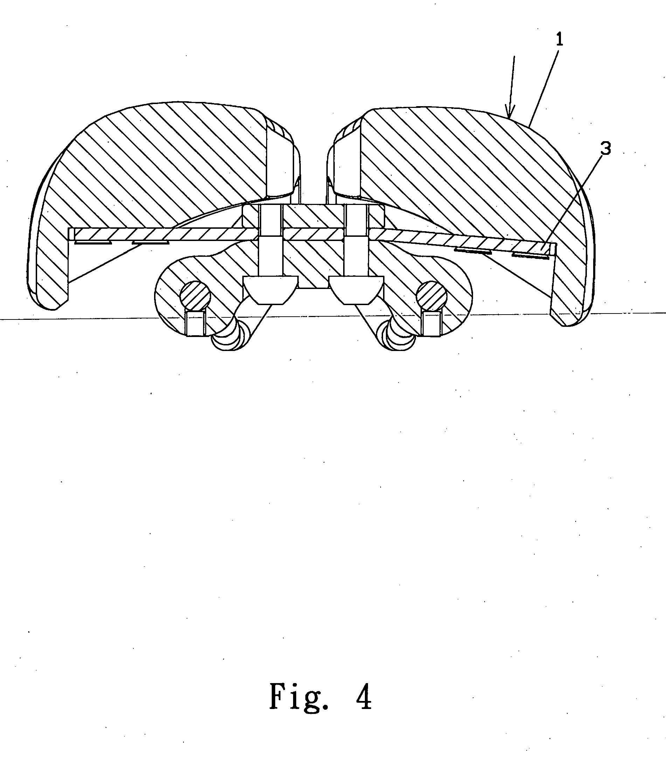

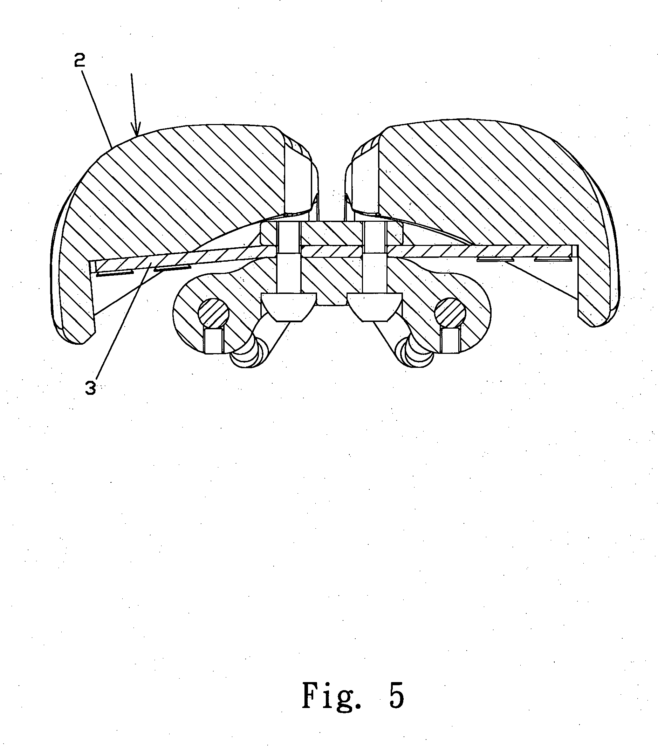

As shown in Figs. 4 and 5, when the first and second parts 1, 2 are applied forces respectively, the cyclist change the poses by changing the positions of the weight center and the hip portion of the cyclist moves left and right when necessary. The spring member 3 is deformed to absorb the forces (shocks) so that the first and second parts 1, 2 can be individually lowered when the cyclist changes the weight center to the part 1/2. The first and second parts 1, 2 return to their original positions when the weight center moves away.

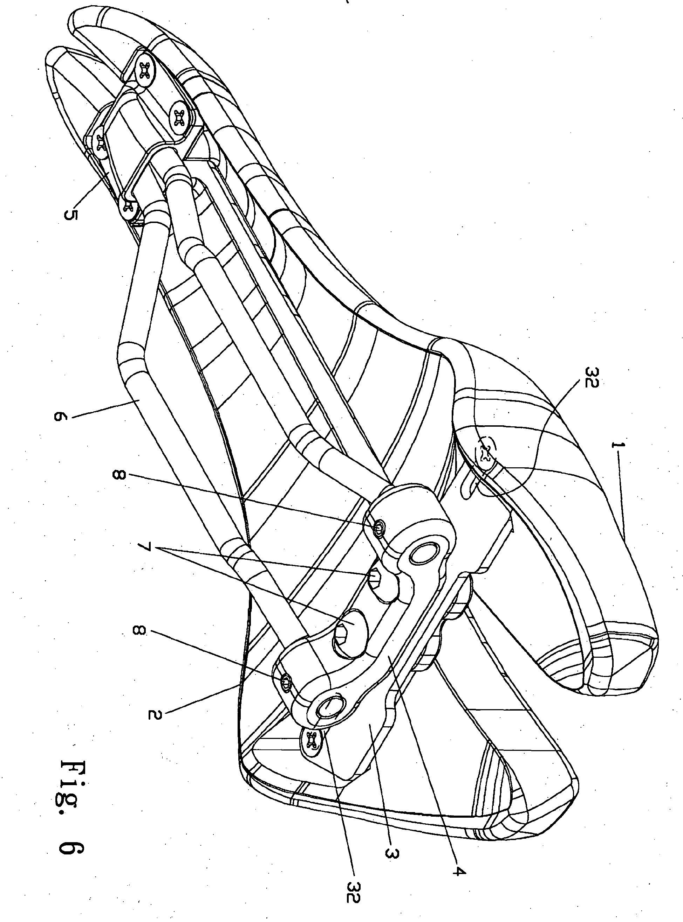

As shown in Fig. 6, the spring member 3 includes two slots 32 defined longitudinally in two ends thereof so that the bolts can fix the two ends of the spring member 3 at different positions and this adjusts the length of the arm of force of the spring member 3 for the first and second parts 1, 2. By the position that the bolt is located in the slot 32 to fix the spring member 3 to the first/second part 1/2, the first/second part 1/2 can be adjusted to be soft or stiff when being deformed.

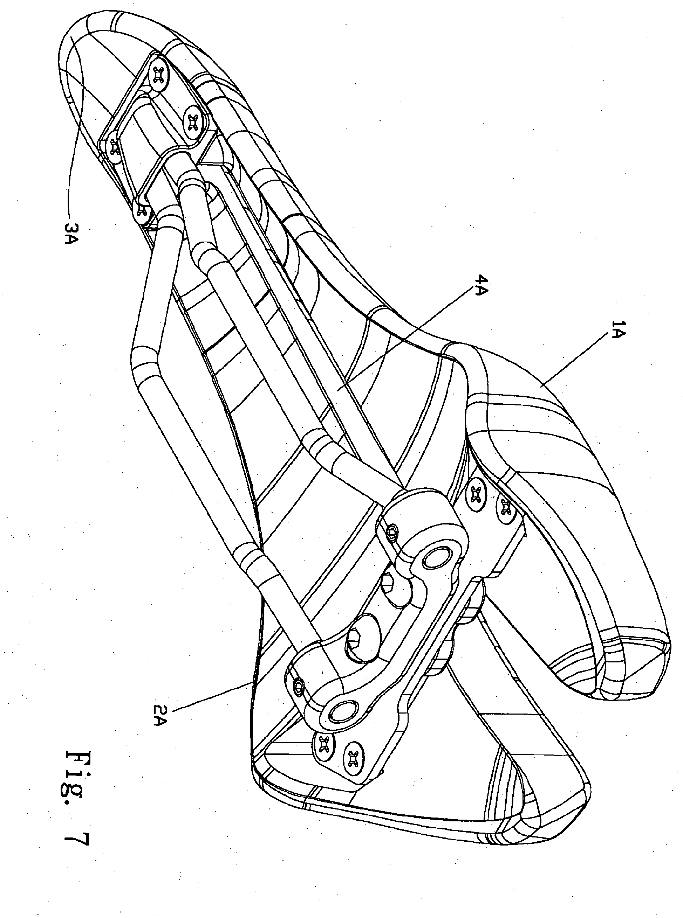

Fig. 7 shows another embodiment of the bicycle seat of the present invention, wherein the first and second parts 1 A, 2A are connected at respective front ends thereof so as to from a closed area 3A and a gap 4A is defined longitudinally from the closed area 3A to the rear ends of the first and second parts 1A, 2A.

While we have shown and described the embodiment in accordance with the present invention, it should be clear to those skilled in the art that further embodiments may be made without departing from the scope of the present invention.

## Claims

1. A bicycle seat comprising:
a first part (1) having a narrow front end and a wide rear end;
a second part (2) having a narrow front end and a wide rear end, the first and second parts (1, 2) being located side by side;
a member (3) having two ends fixed to the two respective rear ends of the first and second parts (1, 2) respectively; and
a second fixing member (5) connected across the two respective front ends of the first and second parts (1, 2) respectively,
**characterized in that** said member (3) is a spring member (3) and the bicycle seat further comprises a first fixing member (4) fixed to the spring member (3).

2. The bicycle seat as claimed in claim 1, wherein the first and second parts (1, 2) are two individual parts.

3. The bicycle seat as claimed in claim 1, wherein the spring member (3) includes at least one first threaded hole (31) defined in a mediate portion thereof.

4. The bicycle seat as claimed in claim 3, wherein the first fixing member (4) includes a second threaded hole (41) which is located corresponding to the at least one first threaded hole (31), two passages (42) are defined in two ends of the first fixing member (4), two third threaded holes (43) are respectively defined through a wall of the two ends of the first fixing member (4) and communicate with the two passages (42) respectively.

5. The bicycle seat as claimed in claim 4, wherein a first bolt (7) is connected to the second threaded hole (41) of the first fixing member (4).

6. The bicycle seat as claimed in claim 4, wherein a second bolt (8) is connected to the third threaded hole (43) of the first fixing member (4).

7. The bicycle seat as claimed in claim 1, wherein the spring member (3) is a spring board and includes two slots (32) defined therein.

8. The bicycle seat as claimed in claim 1, wherein the second fixing member (5) has a reception recess (51).

9. The bicycle seat as claimed in claim 8, wherein a frame (6) includes a closed end (61), a first distal end (62) and a second distal end (63), the closed end (61) is inserted into the reception recess (51) of the second fixing member (5).

10. The bicycle seat as claimed in claim 8, wherein the first and second parts (1A, 2A) are connected at respective front ends thereof so as to from a closed area (3A) and a gap (4A) is defined longitudinally from the closed area (3A) to the rear ends of the first and second parts (1 A, 2A).

11. The bicycle seat as claimed in claim 1, wherein the first fixing member (4) is fixed to an underside of the spring member (3).

## Patentansprüche

1. Fahrradsattel, umfassend:
ein erstes Teil (1) mit einem schmalen vorderen Ende und einem breiten hinteren Ende;
ein zweites Teil (2) mit einem schmalen vorderen Ende und einem breiten hinteren Ende, wobei das erste und zweite Teil (1, 2) nebeneinander angeordnet sind;
ein Element (3) mit zwei Enden, die an den beiden jeweiligen hinteren Enden des ersten beziehungsweise zweiten Teils (1, 2) befestigt sind; und
ein zweites Befestigungselement (5), das mit den jeweiligen vorderen Enden des ersten beziehungsweise zweiten Teils (1, 2) quer darüber verbunden ist,
**dadurch gekennzeichnet, dass** das Element (3) ein Federelement (3) ist und der Fahrradsattel ferner ein erstes Befestigungselement (4) umfasst, das an dem Federelement (3) befestigt ist.

2. Fahrradsattel nach Anspruch 1, wobei das erste und zweite Teil (1, 2) zwei einzelne Teile sind.

3. Fahrradsattel nach Anspruch 1, wobei das Federelement (3) mindestens eine erste Gewindebohrung (31) aufweist, die in einem mittleren Abschnitt davon festgelegt ist.

4. Fahrradsattel nach Anspruch 3, wobei das erste Befestigungselement (4) eine zweite Gewindebohrung (41) aufweist, die entsprechend der mindestens einen ersten Gewindebohrung (31) angeordnet ist, zwei Kanäle (42) in zwei Enden des ersten Befestigungselements (4) festgelegt sind, zwei dritte Gewindebohrungen (43) jeweils durch eine Wand der beiden Enden des ersten Befestigungselements (4) hindurch festgelegt sind und jeweils mit den beiden Kanälen (42) in Verbindung stehen.

5. Fahrradsattel nach Anspruch 4, wobei eine erste Schraube (7) mit der zweiten Gewindebohrung (41) des ersten Befestigungselements (4) verbunden ist.

6. Fahrradsattel nach Anspruch 4, wobei eine zweite Schraube (8) mit der dritten Gewindebohrung (43) des ersten Befestigungselements (4) verbunden ist.

7. Fahrradsattel nach Anspruch 1, wobei das Federelement (3) eine Federplatte ist und zwei darin festgelegte Schlitze (32) aufweist.

8. Fahrradsattel nach Anspruch 1, wobei das zweite Befestigungselement (5) eine Aufnahmevertiefung (51) aufweist.

9. Fahrradsattel nach Anspruch 8, wobei ein Rahmen (6) ein geschlossenes Ende (61), ein erstes distales Ende (62) und ein zweites distales Ende (63) aufweist, das geschlossene Ende (61) in die Aufnahmevertiefung (51) des zweiten Befestigungselements (5) gesteckt ist.

10. Fahrradsattel nach Anspruch 8, wobei das erste und zweite Teil (1A, 2A) an jeweiligen vorderen Enden davon verbunden sind, sodass ein geschlossener Bereich (3A) entsteht, und ein Spalt (4A) in Längsrichtung von dem geschlossenen Bereich (3A) bis zu den hinteren Enden des ersten und zweiten Teils (1A, 2A) festgelegt ist.

11. Fahrradsattel nach Anspruch 1, wobei das erste Befestigungselement (4) an einer Unterseite des Federelements (3) befestigt ist.

## Revendications

1. Siège de bicyclette comprenant :
une première partie (1) ayant une extrémité avant étroite et une extrémité arrière large ;
une seconde partie (2) ayant une extrémité avant étroite et une extrémité arrière large, les première et seconde parties (1, 2) étant situées côte à côte ;
un élément (3) ayant deux extrémités fixées aux deux extrémités arrière respectives des première et seconde parties (1, 2), respectivement ; et
un second élément de fixation (5) relié à travers les deux extrémités avant respectives des première et seconde parties (1, 2), respectivement,
**caractérisé par le fait que** ledit élément (3) est un élément ressort (3) et le siège de bicyclette comprend en outre un premier élément de fixation (4) fixé à l'élément ressort (3).

2. Siège de bicyclette selon la revendication 1, dans lequel les première et seconde parties (1, 2) sont deux parties individuelles.

3. Siège de bicyclette selon la revendication 1, dans lequel l'élément ressort (3) comprend au moins un premier trou fileté (31) défini dans une partie centrale de celui-ci.

4. Siège de bicyclette selon la revendication 3, dans lequel le premier élément de fixation (4) comprend un deuxième trou fileté (41) qui est situé en correspondance de l'au moins un premier trou fileté (31), deux passages (42) sont définis dans deux extrémités du premier élément de fixation (4), deux troisièmes trous filetés (43) sont respectivement définis à travers une paroi des deux extrémités du premier élément de fixation (4) et communiquent avec les deux passages (42), respectivement.

5. Siège de bicyclette selon la revendication 4, dans lequel un premier boulot (7) est relié au deuxième trou fileté (41) du premier élément de fixation (4).

6. Siège de bicyclette selon la revendication 4, dans lequel un second boulon (8) est relié au troisième trou fileté (43) du premier élément de fixation (4).

7. Siège de bicyclette selon la revendication 1, dans lequel l'élément ressort (3) est une lame ressort et comprend deux fentes (32) définies dans celle-ci.

8. Siège de bicyclette selon la revendication 1, dans lequel le second élément de fixation (5) comprend une cavité de réception (51).

9. Siège de bicyclette selon la revendication 8, dans lequel un cadre (6) comprend une extrémité fermée (61), une première extrémité distale (62) et une seconde extrémité distale (63), l'extrémité fermée (61) est introduite dans la cavité de réception (51) du second élément de fixation (5).

10. Siège de bicyclette selon la revendication 8, dans lequel les première et seconde parties (1A, 2A) sont reliées aux extrémités avant respectives de celles-ci de façon à former une zone fermée (3A) et un espace (4A) est défini longitudinalement de la zone fermée (3A) aux extrémités arrière des première et seconde parties (1A, 2A).

11. Siège de bicyclette selon la revendication 1, dans lequel le premier élément de fixation (4) est fixé à un côté inférieur de l'élément ressort (3).
